# EUROPEAN PATENT SPECIFICATION

(11) **EP 1 544 142 B1**
(45) Date of publication and mention of the grant of the patent: **24.12.2008**
(21) Application number: 03029532.3
(22) Date of filing: 21.12.2003
(51) Int. Cl.: B65H 19/10

(54) **Machine-detectable butt splicing tape**
Maschinell erkennbares Band zum Stossverbinden
Bande détectable à la machine pour joints bout à bout

(43) Date of publication of application: 22.06.2005
(73) Proprietor: 3M Innovative Properties Company, St. Paul MN 55133-3427 (US)
(72) Inventor: Garcia, Henri, 28004 Madrid (ES); Calderon, Salud, 28033 Madrid (ES); Luca, Maria, 40627 Duesseldorf (DE)
(74) Representative: Kurz, Arnd

(56) References cited:
- EP-A- 0 683 122
- WO-A-03/018453
- WO-A-03/018454
- US-A- 4 543 152
- US-A- 5 916 651

## Description

### Field of the invention

The present invention relates to a machine-detectable butt splicing tape for splicing the leading edge of a roll of sheet material to a further sheet material, said butt splicing tape comprising a splittable system which breaks upon splicing so that the outer surface of the underlying winding of said roll is left in a non-tacky condition, and a machine-detectable means to facilitate the splicing process and allow for locating the splice subsequent to splicing. The present invention furthermore relates to a method for preparing a roll of sheet material for making a splice connection between the leading edge of said roll and a further sheet material and to a method of making a flying splice connection between the leading edge of a roll of sheet material and a further sheet material.

### Background of the invention

In the paper industry, for example, it is often necessary to connect two paper webs together. After a paper web has been produced it will typically be checked immediately, for example, for holes and other imperfections. Such defects are cut off from the web, and the resulting end edges are re-connected by splicing tapes forming a splicing connection.

While such splicing operation can often be prepared under stationary conditions, it is usually required, for example, in the printing industry that a new roll of paper is connected to the depleting paper web of the old roll of paper under continuous production conditions. This process which is also accomplished by a splicing tape, is usually referred to as a flying splice operation.

It is generally differentiated between butt splicing tapes and overlap splicing tapes. Overlap splicing tapes are applied to the outer surface of the leading edge of a roll of paper, for example, so that the splicing area is formed by the leading edge of the roll of paper and part of the further web of paper the roll is connected to with the overlap splicing tape being sandwiched between such two paper webs.

Overlap splicing connections tend to be relatively thick so that they are less preferred in many production processes.

Butt splicing tapes are applied to the inner surface of the leading edge of a roll of paper and to the further web of paper the roll is to be connected to so that the butt splicing tape carries the two paper webs on one side. Butt splicing connections therefore tend to be thinner in comparison to overlap splicing connections and they are generally preferred.

Butt splicing tapes are known and they are disclosed, for example, in EP 0,757,657. This reference describes butt splicing tapes comprising a preformed attachment portion which releasably connects the butt splicing tape to the outer surface of the underlying winding of the roll of paper before the splice is made. Upon splicing this attachment portion breaks or is released from the underlying winding of the roll leaving the outer surface of said underlying winding in a non-tacky condition. Butt splicing tapes are also disclosed, for example, in US 6,488,228. This butt splicing tape comprises a backing having a splittable system which breaks upon splicing thereby releasing an upper and lower portion, respectively, of the splicing tape.

In flying splice operations, the roll of paper which needs to be connected to the depleting end of a further web of paper, is accelerated prior to splicing so that its rotational speed is essentially equal to the speed of the depleting web of paper. The splicing connection is made by pressing the roll of paper against the depleting end of the further web of paper when the splicing tape is located between the two webs. Once the splicing connection has been made, the trailing end of the depleting web is cut off. In order to facilitate this operation it has been suggested to include machine-detectable means into the splicing tape. Machine-detectable butt splicing tapes are disclosed, for example, in WO 03/018,454. This tape includes a main carrier layer bearing, for example, an aluminium layer extending along the width of the tape. The aluminium layer needs to be secured to the carrier layer by lamination or by an additional adhesive layer which makes the construction of the tape more complex and difficult to manufacture.

Other machine-detectable splice tape constructions are disclosed, for example, in WO 03/018,451, WO 03/018,452 and WO 03/018,453.

It was therefore an object of the present invention to provide a butt splicing tape which leaves the outer surface of the underlying winding of a roll of sheet material such as paper in a non-tacky condition when the splice connection is made, which reliably provides machine-detectability, which is easy to handle by the splicing operator and which is easy to manufacture. Other objects of the present invention are apparent to the person skilled in the art from the following detailed specification.

### Brief description of the invention

The present invention relates to a machine-detectable butt splicing tape as specified in claims 1-5.

The present invention furthermore relates to a method of preparing a roll of sheet material for making a splice connection as specified in claim 6.

The present invention furthermore relates to a method of making a flying butt splicing connection as specified in claim 7.

### Brief description of the figures

*Fig. 1* shows a first embodiment of a butt splicing tape 1 of the present invention with the machine-detectable means 6 being arranged on the adhesive layer 2 beneath the protective film 3 in an essentially abutting position with respect to the inner edge of the protective film 4.
*Fig*. *2*shows a second embodiment of a butt splicing tape 1 of the present invention with the machine-detectable means 6 being arranged beneath both protective films 3 and 4.
*Fig. 3a* shows the butt splicing tape 1 of Fig. 1 and 2 used in a flying butt splice operation to connect the leading edge 21 of the new roll 20 to the further web 30 of a sheet material.
*Fig. 3b* shows a schematic comparison of the signal 42 of the sensor 40 with the detection frequency 43 of the paster device 41.
*Fig. 4* shows a third embodiment of the butt splicing tape 1 of the present invention with the machine-detectable means 6 being arranged on the adhesive layer 8.
*Fig*. *5* shows the butt splicing tape of Fig. 4 being used in a flying butt splice operation connecting the leading edge 21 of the new roll 20 to the further web 30 of a sheet material.
*Fig*. *6* shows an example of a butt splicing tape with machine-detectable means 6 being arranged on the surface of the backing opposite to the adhesive layer 2.

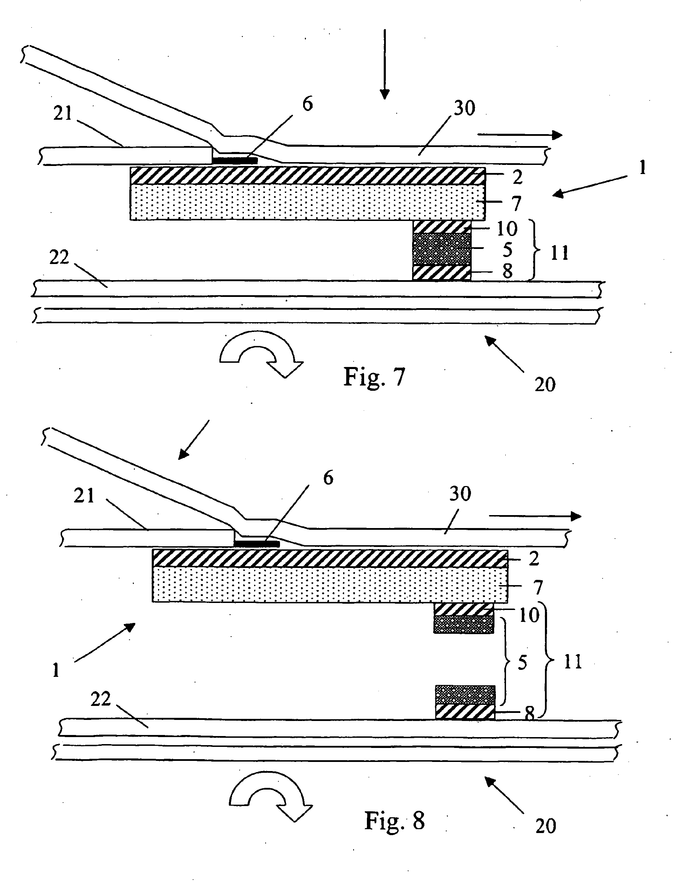

*Figs. 7 and 8* show an example of a butt splicing tape being used in a flying butt splice operation connecting the leading edge 21 of the new roll 20 to the further web 30 of a sheet material. The butt splicing tape 1 comprises an auxiliary attachment system 11 comprising the splittable system 5.

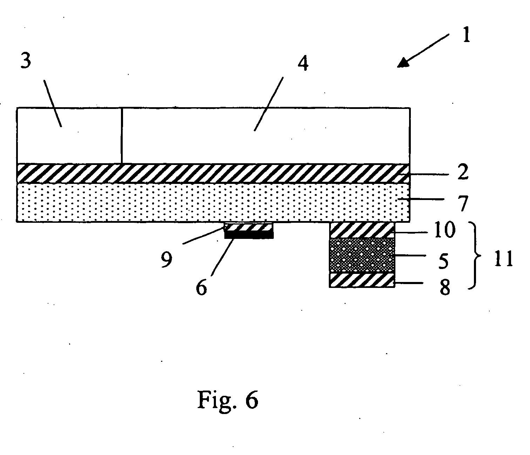

The examples shown in Figs 6, 7 and 8 are according to the invention.

### Detailed description of the invention

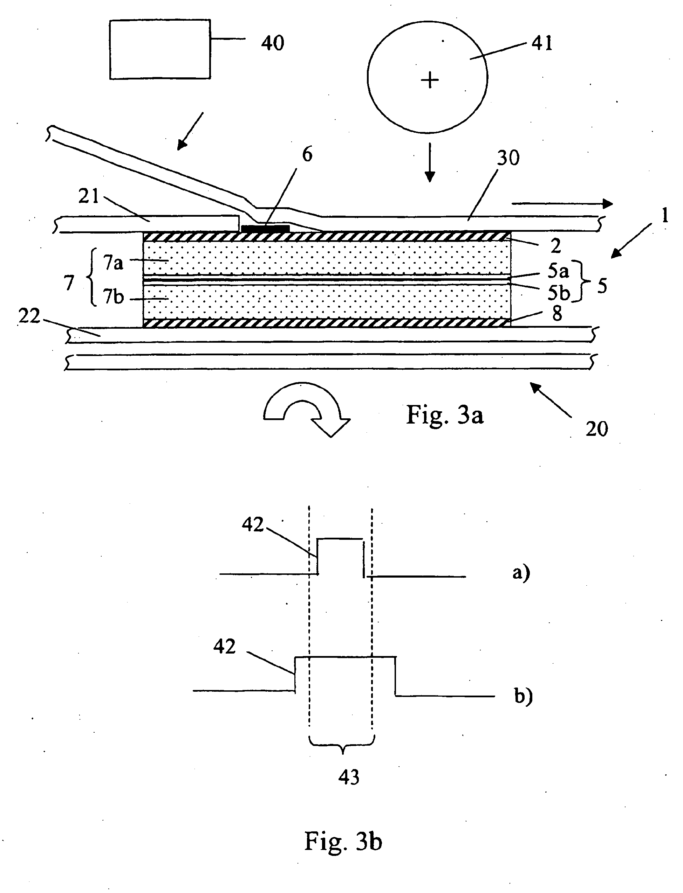

Above and below, the splicing connection is described to be made between a roll 20 of sheet material and a further sheet material 30. The roll 20 of sheet material typically has a multitude of windings or layers each of them having an outer surface facing radially outwards from said roll 20 and an opposite inner layer. The part of the topmost layer which is connected during splicing to the further sheet material 30, is also referred to as the leading edge 21 of the topmost layer of the roll 20. The next-to-the-topmost winding is referred to as underlying winding 22 of the roll 20. In Fig. 3a, 5, 7 and 8 only the leading edge 21 of the topmost layer, the next-to-the-outmost layer (underlying winding 22) and the next lower layer of the roll 20 are shown; the other layers of the roll are omitted.

In some applications such as, for example, in splicing applications in the printing industry, the roll 20 of sheet material is also referred to as new roll whereas the further sheet material 30 is referred to as depleting sheet material.

Above and below, the direction into which the roll 20 of sheet material is unwound is referred to as machine direction (MD) whereas the direction accross the width of the roll is referred to as cross-direction (CD).

The sheet material of the roll 20 and the further sheet material 30 may comprise independently from each other paper webs, polymeric sheet materials and metallic foils. A preferred sheet material is paper.

The butt splicing tape 1 of the present invention comprises an adhesive layer 2 to form the splicing connection between the leading edge 21 of the roll 20 and the further sheet material 30. The adhesive layer 2 preferably extends along the length of the butt splicing tape 1 (i. e. in MD when the butt splicing tape 1 is applied to the roll 20) but it is also possible that the adhesive layer 2 comprises two or more adhesive segments in MD. The adhesive of adhesive layer 2 may include any known adhesive that permanently and strongly adheres to the leading edge 21 of the roll 20 and to the further sheet material 30 thus forming the splicing connection between such leading edge 21 and the further sheet material 30. Examples of suitable adhesives include pressure sensitive adhesives, heat activated adhesives, thermosetting adhesives and remoistenable adhesives. Particularly preferred adhesives include pressure-sensitive adhesives which may be hot-melt adhesives, essentially solvent or water-free adhesives or solvent- or water-based dispersions or solutions. Specific pressure-sensitive adhesives include acrylate-based pressure-sensitive adhesives, styrene-isoprene block copolymers, acrylic ester-vinyl acetate copolymers, ethylenevinyl acetate copolymers, plasticized vinyl acetate homopolymers and rubber-latex resin emulsion systems. In the practice of preferred embodiments of the invention, the adhesive composition comprises an acrylate-based pressure-sensitive adhesive. Acrylate-based pressure-sensitive adhesives useful in practicing the invention comprise polymers of one or more monomers of (meth)acrylic acids and/or (meth)acrylates and optionally other copolymerizable monomers containing functional groups in addition to an ethylenically unsaturated group. The acrylate-based pressure-sensitive adhesive may comprise conventional additives such as, for example, fillers, anti- oxidants, flame-retardants, pigments, plasticizers or polymer additives. By varying the nature and amount of the monomers and the nature and amount of the additives, the cohesive properties of the resulting adhesive can be changed as is known in the art.

Examples of acrylate-based pressure-sensitive adhesives which are suitable in the practice of the invention are described in Satas, "Acrylic Adhesives," Handbook of Pressure-Sensitive Adhesive Technology, 2nd ed., pp. 396-456 (D. Satas, ed.), Van Nostrand Reinhold, New York (1989).

A particularly suitable acrylate based pressure-sensitive adhesive includes copolymers of an acrylic or methacrylic acid and an alkyl acrylate or methacrylate wherein the alkyl group has at least 4 carbon atoms, typically 4 to 14 carbon atoms. Examples of such alkyl acrylates or methacrylates include n-butyl, n-pentyl, n-hexyl, cyclohexyl, isoheptyl, n-nonyl, n-decyl, isohexyl, isobornyl, 2-ethyloctyl, isooctyl, and 2-ethylhexyl acrylates and methacrylates. Preferred alkyl acrylates include Isooctyl acrylate, 2-ethylhexyl acrylate, n-butylacrylate and cyclohexyl acrylate. A particularly preferred alkyl acrylate is isooctyl acrylate. Particularly preferred alkyl methacrylates include butyl methacrylate, cyclohexyl methacrylate, and isobornyl methacrylate. In accordance with a highly preferred embodiment of this invention, the adhesive layers 2 and 8 comprise a repulpable adhesive. A preferred repulpable adhesive for use in this invention has a rating of not more than 3 in the European repulpability test described in U.S. Pat. No. 5,380,779. Examples of repulpable adhesives for use In the invention include the repulpable adhesives disclosed in US 5,380,779; US 4,413,080; US 4,569,960; US 4,482,675; US 4,388,432; US 5,102,733; and US 5,125,995. The thickness of the adhesive layers 2 or 8 can be varied widely but is typically independent of each other and is typically between 10 µm and 100 µm and preferably between 20 µm and 50 µm.

The adhesive layer 2 is covered by two protective films 3 and 4 which are in an essentially abutting position with respect to each other and can be removed separately from the adhesive layer 2.

When the roll 20 is prepared for making a splice connection between its leading edge 21 and the further sheet material 30, the leading edge 21 of the roll 20 is preferably folded back and the butt splicing tape 1 is adhered through the adhesive layer 8 to the outer surface of the underlying winding 22 of the roll 20 essentially across the width of the roll 20 in CD. The butt splicing tape 1 is arranged so that the leading edge 21 when placing it back -for checking the proper arrangement of the butt splicing tape 1 on the underlying winding- onto the outer surface of the underlying winding 22, covers the protective film 3. The leading edge 21 is folded back again, the protective film 3 is then removed, and the leading edge 21 is folded back onto the outer surface of the underlying winding 22, thereby adhering the inner surface of the leading edge 21 of the roll 20 to the exposed part of the adhesive layer 2.

Then the leading edge 21 of the roll 20 is folded back along the inner edge of the protective film 4 which was prior to the removal of the protective film 3 in an essentially abutting position with respect to the outer edge of the protective film 3. The part of the leading edge 21 which is folded back is then torn off. Now the leading edge 21 of the roll 20 is in an essentially abutting position with respect to the protective film 4. In the next step, the protective film 4 is removed thereby exposing part of the adhesive layer 2, and the roll 20 is ready for being spliced to the further sheet material 30.

The protective films 3 and 4 exhibit release properties on their respective inner surfaces attached to the adhesive layer 2 so that they can be easily removed from such adhesive layer 2. It is also preferred that the protective films 3 and 4 exhibit release properties on their outer surfaces so that the butt splicing tape 1 can be wound into a roll and easily be unwound subsequently. The protective films 3, 4 usually comprise a base layer having a release material coated onto one side of such base layer or on both sides in case the butt splicing tape 1 is wound up in the form of a roll.

The base layer of the protective films 3, 4 may be selected from kraft papers, super-calandered kraft papers, clay coated kraft papers, glassines, parchments, and other papers and films which have a suitable undercoating for realease coating hold-out. The release coating may be any of the known materials used for their release properties for adhesives. Preferred types are silicones and modified silicones, the modification including both copolymerization of silicones with other non-release chemical agents or by adding non-silicone materials to the silicone coating solution prior to application to the release base paper. Other release agents such as polyethylene, fluorocarbons, the Werner-type chromium complexes, and polyvinyl octadecyl carbamate may also be used. The choice of release coating is dependent on the tack, adhesion level, and chemical nature of the adhesive layer 2. The release coating is chosen such when the protective films 3, 4 are removed from the splicing tape, no premature separation of the butt splicing tape 1 takes place through the splittable system 5.

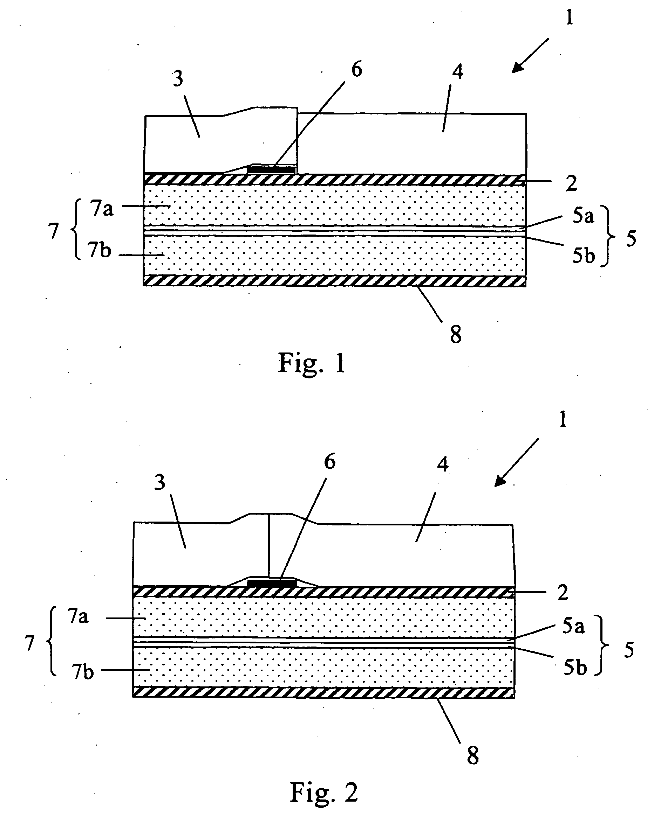

The butt splicing tape 1 of the present invention further comprises a backing 7 which may comprise two or more layers 7a, 7b as is shown, for example, in the butt splicing tape 1 of Fig. 1, or one layer only. The backing 7 comprises the splittable system 5 as is shown, for example, In the butt splicing tape of Fig. 1.

The backing 7 at least comprises a first layer 7a bearing the adhesive layer 2. Such layer 7a may comprise any material commonly used for backings of tapes and includes paperlayers as well as backing films. Suitable materials for such first layer 1 of the backing include polyethylene films, polypropylene films, polyester films, polyethylene or polypropylene coated papers, kraft papers, splittable paper layers and non-woven materials. Paper layers are preferred because of their repulpability. One suitable backing material is a white, repulpable 31 gram/m² paper backing available from Akrosil, Europe in the Netherlands. Splittable paper layers are disclosed, for example, in EP 0,831,046. The thickness of this layer of the backing 7 preferably is between 30 and 100 µm and preferably between 40 and 70 µm. It is possible that suitable coatings or films are attached to the backing 7 or backing layer 7a materials, respectively, disclosed above.

The first layer 7a of the backing 7 may also represent the splittable system 5 as is disclosed, for example, in EP 0,831,046. In this construction, the first and only layer 7a of the backing is a splittable paper layer bearing adhesive layers 2 and 8 on its two opposite major surfaces. In this construction, the adhesive layer 8 is selected to provide a permanent and strong bond to the underlying winding 22 of the roll 20, and the adhesive of the adhesive layer 8 may be selected from the class of adhesives described above for the adhesive layer 2. Upon splicing, the paper layer splits internally so that both the upper surface of the adhesive layer 8 and the lower surface of the adhesive layer 2 are covered with part of such paper layer thereby leaving adhesive layers 2 and 8 and thus the inner surface of the splicing connection between the leading edge 21 and the further sheet material 30 and the outer surface of the underlying winding 22 in a non-tacky condition. It is disclosed in EP 0,831,046 that the paper layer preferably has a basis weight of between 50 - 70 g/m². In this construction, the backing 7 consists of such paper layer which represents the splittable system 5.

The backing 7 may also comprise two ore more layers 7a, 7b which are preferably designed to include a splittable system 5. In CA 2,313,674 it is disclosed that the backing 7 may comprise layers 7a, 7b which preferably are two paper webs being laminated together. The lamination is performed in such a way that the backing 7 breaks upon splicing so that the backing 7 comprises the splittable system 5. This can be done, for example, by laminating two paper webs to each other by means of a water-based lamination composition which provides a splittable layer 5a. Such lamination composition preferably comprises binders such as anionic potato starch or other binders which are useful for manufacturing repulpable tapes. The lamination composition may further comprise release agents and elastifying agents. Suitable release agents include calcium stearate and/or copolymers containing stearyl groups. Suitable elastifying agents include polypropylene glycols, polyethylene glycols and gum Arabic. It is disclosed in CA 2,313,674 that the lamination composition preferably comprises from 10 - 90 wt. % of binder materials, 10 - 90 wt % of release agents and up to 60 wt. % of elastifying agents. The lamination composition is applied onto the first layer 7a of the backing 7 by coating or printing, and the second layer 7b of the backing 7 is laminated onto the layer formed by the lamination composition.

The lamination composition may be applied as a continuous layer or it may be applied, for example, by screen-printing to give a segmented, not fully coated lamination layer.

The second layer 7b of the backing 7 may be selected from the same materials disclosed above for the first layer 7a of the backing 7. Preferably, both the first and the second layer 7a, 7b of the backing 7 are paper layers. Subsequent to the lamination of the second layer 7b of the backing 7, the lamination composition is dried. The dried layer of the lamination composition which provides a splittable layer 5 preferably has a basis weight of between 5 - 20 g/m². Upon splicing the splittable system 5 described above and disclosed in CA 2,313,674 breaks and leaves at least the outer surface of the underlying winding in a non-tacky condition. More preferably, both surfaces obtained upon splitting of the splittable system 5, are non-tacky.

Alternatively, it is also possible to laminate the first layer 7a of the backing 7 to the second layer 7b of the backing 7 by means of an adhesive which is preferably repulpable and does not exhibit tackiness upon splicing. Suitable adhesive materials comprise, for example, polyvinyl-pyrrolidone, copolymers of vinylpyrrolidone and/or hydroxypropylcellulose. The adhesive materials may further comprise waxes such as stearic acid esters and water-soluble plasticizers.

Preferred adhesives include the synthetic resin emulsion adhesive commercially available as Lunabond 1533X adhesive from H. B. Fuller, Dukinfield, Cheshire, UK. Other suitable adhesives include the polyvinylacetate (PVA) based adhesives available commercially as SUPER-LOK250; PELLETIE-FIX321; BIND-FLEX20; and 072-0243; all available from Direct Adhesives, Buckinghamshire, UK.

This adhesive composition is applied to one of the backing layers 7a of the backing 7. The surface of the other backing layer 7b of the backing 7 facing the adhesive layer on the backing layer 7a, is coated with a barrier layer preventing the adhesive layer from penetrating into the backing layer 7b. Suitable materials for such barrier layers include L001 UV lacquer; V073 UV lacquer; L044 UV lacquer, and T7201 UV tint medium; all available from Paragon Inks, East Mains Industrial Estate, Broxburn, West Lothian, Scotland, EH52 5NB. The barrier layers may also include a release material such as silicone or fluorine containing material. Particularly suitable materials are silicone-containing materials. The adhesive layer and the barrier layer provide a splittable system 5 with two layers 5a, 5b. By varying the amount of silicone in the barrier layer, the force required for breaking the splittable system 5 of the butt splicing tape comprising the splittable layers 5a and 5b, can be adjusted as desired. Also, varying the coating weight of the barrier layer may be done to achieve the desired splicing, such as by using anilox coating rollers of varying theoretical volume. Upon splicing, the splittable system 5 described above breaks and leaves at least the outer surface of the underlying winding in a non-tacky condition. More preferably, both surfaces obtained upon splitting of the splittable system 5, are non-tacky.

The butt splicing tape 1 may also comprise two backing layers 7a, 7b which each bear on their respective inner surface a barrier layer. The two barrier layers which are facing each other, are bonded together by means of an adhesive which upon splicing exhibits a non-tacky surface. Such construction which comprises a splittable system 5 having three layers 5a, 5b and 5c (two barrier layers and an adhesive layer), is disclosed in US 6,488,228. Upon splicing the splittable system 5 disclosed in US 6,488,228 breaks and leaves at least the outer surface of the underlying winding in a non-tacky condition. More preferably, both surfaces obtained upon splitting of the splittable system 5, are non-tacky.

If the splittable system 5 is identical with the backing 7 or is comprised in the backing 7, respectively, as is described above, the adhesive layer 8 which secures the butt splicing tape 1 to the underlying winding 22 of the roll 20, is preferably selected so that it strongly and permanently adheres the butt splicing tape 1 to the underlying winding 22 of the roll. In such case, the adhesive of the adhesive layer 8 is preferably selected from the group of adhesives used in the adhesive layer 2.

In an alternative construction which is not according to the invention, the butt splicing tape 1 may comprise at least one auxiliary attachment system 11 which is attached to the surface of the back-ing 7 or the backing layer, respectively, facing the outer surface of the underlying winding 22 of the roll 20. This auxiliary attachment system 11 secures the butt splicing tape to the outer surface of the underlying winding 22 of the roll prior to splicing and comprises a splittable system 5. In a first construction, the auxiliary attachment system comprises a repositionable adhesive layer. Suitable repositionable adhesives are disclosed, for example, in US 3,691,140 and US 4,166,152, and repositionable adhesive tapes and other repositionable articles are available from 3M Company under the Post-it brand. The repositionable adhesive is selected so that upon splicing, the adhesive layer releases from the underlying winding 22 of the roll 20 and remains adhered to the surface of the backing 7 or the backing layer, respectively, facing the underlying winding 22 of the roll 20, i. e. the repositionable adhesive is carried away with the butt splicing tape 1 thus leaving the outer surface of the underlying winding 22 of the roll 20 in a non-tacky condition. Such a construction is disclosed, for example, In Fig. 6a of EP 0,757,657.

A more complex construction of the auxilliary attachment system 11 which is not according to the invention is shown in Fig. 6. In this case, the auxiliary attachment system 11 comprises a splittable system 5 which is sandwiched between two adhesive layers 8 and 10. The splittable system 5 may have the same construction as described above for splittable systems included into the backing 7. The adhesive layers 8, 10 are preferably selected to strongly and permanently adhere the auxiliary attachment system 11 to the surface of the backing 7 or the backing layer, respectively, facing the outer surface of the underlying winding 22 of the roll 20, and to such underlying winding 22 of the roll 20. Upon splicing, the splittable system breaks apart as is schematically shown in Fig. 8 leaving the outer surface of the underlying winding 22 of the roll 20 in a non-tacky condition. More preferably, both surfaces obtained upon splitting of the splittable system 5, are essentially non-tacky. The adhesive used in the adhesive layers 8 and 10 may in this case be selected from the adhesive materials disclosed above for the adhesive layer 2.

The extension of the auxiliary attachment system 11 in MD typically is distinctly less than the extension of the butt splicing tape 1. The ratio of the extension of the auxiliary attachment system 11 in MD over the extension of the butt splicing tape 1 in MD preferably is between 0.05 and 0.5, more preferably between 0.1 and 0.4 and especially preferably between 0.1 and 0.3. If desired, more than one attachment system 11 may be used.

The construction of the various embodiments of butt splicing tapes 1 described above is to illustrate the invention without limiting it. The butt splicing tape 1 of the present invention generally comprises an adhesive layer 2 which is covered by two protective films 3, 4 and which is supported by a backing layer 7a. The butt splicing tape 1 further comprises a splittable system 5 which may comprise one or more layers 5a, 5b which are comprised in the backing 7. The butt splicing tape further comprises an adhesive layer 8 which secures the butt splicing tape 1 to the outer surface of the underlying winding 22 of the roll 20 prior to splicing. The adhesive layers 2, 8 and the bonding strengths between the various layers in the butt splicing tape 1 are selected so that upon splicing, the splittable system 5 breaks apart leaving the outer surface of the underlying winding in a non-tacky condition, i.e. the splittable system 5 leaves upon splicing no substantial quantities of adhesive on the outer surface of the underlying winding since this adhesive may otherwise disrupt the way the paper is subsequently printed. More preferably, both surfaces obtained upon splitting of the splittable system 5, exhibit a non-tacky condition.

While such construction is conventional it was found by the present inventors that such conventional construction can be made machine-detectable by attaching a metal film or foil 6 onto the adhesive layer 2, onto the adhesive layer 8 and/or onto the surface of the backing 7 or backing layer, respectively, directly facing the outer layer of the underlying winding 22 of the roll 20 with the proviso that the ratio of the width of the machine-detectable means 6 in MD over the width of the butt splicing tape 1 in MD is between 0.05 and 0.5. Application of the machine-detectable means 6 to one of the adhesive layers 2 and 8 is preferred.

The metal film or foil 6 preferably comprises a metallic foil such as, in particular, an aluminium foil. The metallic foil is preferably laminated to a reinforcing paper layer in order to improve its handleability. The metal film or foil 6 can be attached in a particularly easy way to any of the adhesive layers 2 and 8. These adhesive layers are included in the construction of the butt splicing tape 1 anyway so that the application of the metal film or foil 6 does not require an additional adhesive means, for example. It was surprisingly found by the present inventors that the adhesive layers 2, 8 reliably provide their respective performance within the construction of the butt splicing tape 1 if the ratio of the width of the machine-detectable means 6 in MD over the width of the butt splicing tape 1 in MD is between 0.05 and 0.5, more preferably between 0.1 and 0.4 and especially preferably between 0.2 and 0.4. The extension of the machine-detectable means in MD preferably is at least 10 mm, more preferably at least 15 mm and especially preferably between 15 - 25 mm.

The present invention thus allows to subsequently impart machine-detectability to conventional butt splicing tapes which do not comprise such feature, that means conventional butt splicing tapes can be easily converted into and upgraded to machine-detectable butt splicing tapes 1 of the present invention.

In a preferred construction of the present invention, the machine-detectable means is attached to the adhesive layer 2 so that it is completely covered by one of the protective films 3 or 4, respectively. Such a construction is exemplified in Fig. 1 where the machine-detectable means is covered by the cover film 3 and essentially arranged in an abutting position with respect to the inner edge of the cover film 4.

It is schematically shown in Fig. 1 that this arrangement of the metal film or foil 6 provides a fingerlift feature to cover film 3 which facilitates the application of the butt splicing tape 1.

In another preferred construction, the metal film or foil 6 is attached to the adhesive layer 2 so that it is partly covered by both protective films 3 and 4 in an area where the two protective films 3 and 4 are essentially abutting each other. This is schematically shown in Fig. 2. When manufacturing butt splicing tapes, a continuous protective film is usually applied to the adhesive layer 2 first and subsequently cut to provide the two protective films 3 and 4. When cutting the continuous protective film it sometimes happens under production conditions that the cut is too deep and extends into the backing 7 or the backing layer 7a supporting the adhesive layer 2. This weakens the backing 7 or the backing layer 7a and may result in a non-desired pre-formed breaking point in such backing 7 or backing layer 7a which may adversely affect the performance of the butt splicing tape. When arranging the metal film or foil 6 beneath an area of the protective film where such cut is made as is schematically shown in Fig. 2, an additional zone of permissible variation is created which helps to reliably avoid cutting of the backing 7 or backing layer 7a, respectively, under production conditions.

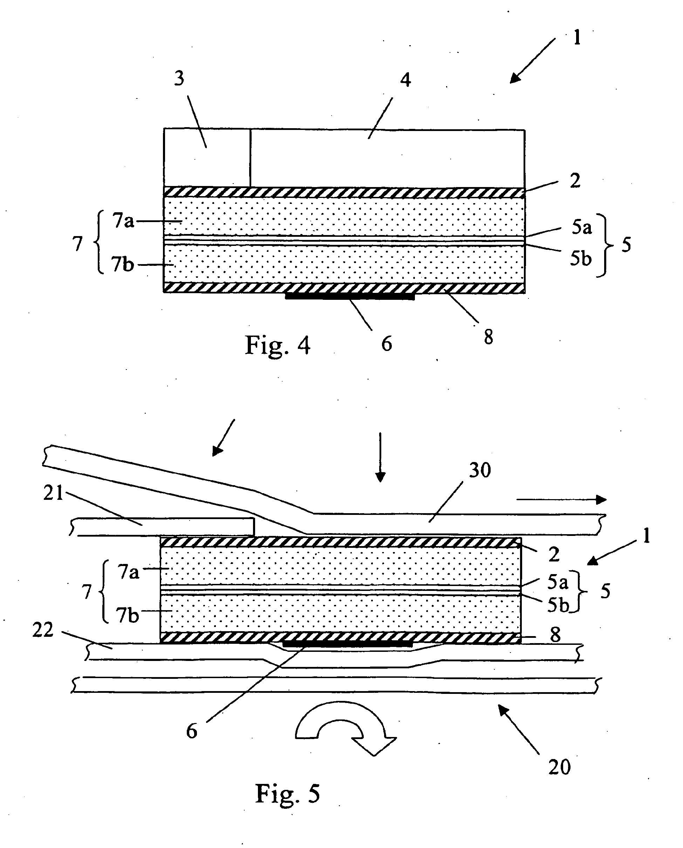

In another preferred construction of the present invention, the metal film or foil 6 is applied to the adhesive layer 8 as is schematically illustrated for a specific construction in Fig. 4. Th is construction is advantageous because it is easy to manufacture and because the width of the metal film or foil in MD can be chosen to be relatively wide within the limits given above without imparting the performance of the adhesive layer 8. Upgrading of conventional butt splicing tapes to a machine-detectable butt splicing tapes 1 of the present invention is particularly convenient because no cover film needs to be removed prior to applying the machine detectable means such as a metal film. Butt splicing tape 1 constructions wherein the adhesive layer 8 essentially extends over the full width of the butt splicing tape in MD are preferred.

In another construction, the metal film or foil is applied with an additional adhesive layer 9 to the surface of the backing 7 or the backing layer 7a, 7b directly facing the outer surface of the underlying winding 22 of the roll 20.

It was furthermore found by the present inventors that the width of the metal film or foil 6 in MD needs to be adapted in view of the sensor used for the detection of the metal film or foil 6 and in view of the detection frequency of the paster device 41. This is schematically illustrated in Fig. 3a, 3b where the rotation direction of the roll 20 and the travelling direction of the further web 30 are indicated. The metal film or foil 6 is detected by the sensor 40 which, depending on the width of the metal film or foil 6, will create a sensor signal 42. This is illustrated in Fig. 3b for two different widths of the machine-detectable means 6 in MD. The sensor signal 42 is fed into the paster device 41 which presses the further web 30 into the direction of the roll 20 thereby creating the splice connection. The detection frequency of the paster device 41 is schematically indicated in Fig. 3b by the distance between the two dotted parallel lines. In Fig. 3b, case a) the signal 42 of the sensor 40 is too short to trigger pasting via the paster device 41 whereas pasting will occur in Fig. 3b, case b). In Fig. 3b, case a), the width of the machine-detectable means 6 needs to be increased or a different paster device 41 having a higher detection frequency needs to be used.

The sensor 40 can be any conventional detecting device suitable for sensing the respective metal film or foil 6. In case a metal foil is used, a sensor 40 may be used which is capable of measuring an induced electrical field in the metallic strip.

The metal film or foil 6 does not only facilitate the splicing operation and allow to minimize the trailing end of the further sheet material which is cut off upon splicing, but it also allows to locate the splice subsequent to splicing. This may be necessary, for example, in the printing industry to dispose of parts of the paper web comprising the splice connection.

### Detailed description of the figures

*Fig. 1* shows a preferred butt splicing tape 1 of the present invention comprising a backing 7 comprising two backing layers 7a, 7b sandwiching a splittable system 5 which in this case comprises two layers 5a and 5b. The backing layer 7a facing outwardly bears the adhesive layer 2 whereas the backing layer 7b bears the adhesive layer 8. The machine-detectable means 6 is attached to the adhesive layer 2 so that it is covered by the protective film 3 and is in an essentially abutting position with respect to the inner edge of the protective film 4. This provides a fingerlift feature to the protective film 3 which facilitates the application of the butt splicing tape 1 of Fig. 1.

*Fig 2* shows another preferred butt splicing tape 1 of the present invention. The construction is similar to that of Fig. 1 but the machine-detectable means 6 is applied to the adhesive layer 2 in the area where the protective films 3 and 4 are abutting each other. The machine-detectable means 6 is thus partly covered by both protective films 3 and 4.

*Fig*. 3a schematically shows the use of the butt splicing tape 1 of Fig. 1 in a flying butt splice operation. The leading edge 21 and part of the underlying winding 22 of the roll 20 are shown, and the direction of rotation of the roll 20 is indicated. The butt splicing tape 1 of Fig. 1 is attached to the roll 20 so that part of the adhesive layer 2 is adhered to the inner surface of the leading edge 21 and so that the butt splicing tape 1 is secured to the underlying winding 22 of the roll 20 via the adhesive layer 8. Fig. 3a schematically shows the situation when the splice connection is made. The further web of sheet material 30 is pressed onto the exposed part of the adhesive layer 2 by means of the paster device 41 as is indicated by an arrow. Another arrow shows where the trailing end of the further sheet material 30 is cut off upon splicing. Another arrow shows the travelling direction of the further sheet material 30, and still another arrow represents the rotation direction of roll 20. The roll 20 is represented by the leading edge 21, the first underlying winding 22 and the next lower underlying winding whereas the further underlying windings of the roll have been omitted.

*Fig. 3b* shows the relationship between the sensor signal 42 of the sensor 40 (shown in Fig. 3a) and of the detection frequency 43 of the paster device 41 (shown in Fig. 3a). The detection frequency 43 corresponds to the distance between the two dotted parallel lines.

Fig. 4 shows another preferred butt splicing tape 1 of the present invention. The construction is similar to that of Fig. 1 but the machine-detectable means is applied to the adhesive layer 8.

Fig. 5 schematically shows the use of the butt splicing tape 1 of Fig. 4 in a flying splice operation. The figure schematically depicts the situation when the flying splice connection is made as was described above for Fig. 3a. The arrows have the meaning as described in Fig. 3a above.

Fig. 6 shows another butt splicing tape 1 comprising an auxiliary attachment system 11 attached to the surface of the backing 7 facing the outer surface of the underlying winding 22 of the roll 20. The backing 7 comprises only one layer bearing the adhesive layer 2 which is covered by the protective films 3 and 4. The auxiliary attachment system 11 comprises the adhesive layer 8 which secures the butt splicing tape 1 prior to splicing to the underlying winding 22 of the roll 20. The auxiliary attachment system 11 also comprises a splittable system 5 which breaks upon splicing. The splittable system 5 is adhered to the surface of the backing 7 facing the outer surface of the underlying winding 22 of the roll 20, via the adhesive layer 10. The machine-detectable means is adhered to the surface of the backing 7 facing the outer surface of the underlying winding 22 of the roll 20, via the adhesive layer 9.

*Fig.s 7 and* 8 show the use of a butt splicing tape 1 having a similar construction like that of Fig. 6, in a flying splice operation. Other than in Fig. 6, the machine-detectable means 6 is adhered to the adhesive layer 2. In Fig. 7 the further web of a sheet material 30 is pressed against the exposed part of the adhesive layer 2 (as indicated by the arrow) while Fig. 8 shows how the splittable system 5 breaks apart upon splicing. The arrow indicates that the trailing end of the web 30 is cut off once the splicing connection has been made. The other arrows have the meaning as described in Fig. 3a above.

Fig 6 to 8 are not according to the invention.

### List of reference numbers

- 1: butt splicing tape
- 2: adhesive layer for making the splice connection
- 3: protective film
- 4: protective film
- 5: splittable system
- 5a, b: layers of the splittable system
- 6: machine-detectable means
- 7: backing
- 7a, b: backing layers
- 8: adhesive layer for securing the butt splicing tape 1 to the underlying winding 22 of the roll of sheet material 20
- 9: adhesive layer
- 10: adhesive layer
- 11: auxiliary attachment system
- 20: roll of sheet material
- 21: leading edge of roll of sheet material 20
- 22: underlying winding of roll of sheet material 20
- 30: further web of a sheet material
- 40: sensor
- 41: paster device
- 42: sensor signal
- 43: paster device detection frequency

### Examples

The present invention will be further explained with regard to the following detailed examples. These examples are offered to further illustrate the various specific and preferred embodiments and techniques. It should be understood, however, that many variations and modifications may be made while remaining within the scope of the present invention.

### Example 1

A first single-sided repulpable adhesive tape comprising a layer of tissue paper (weight of 31 g/m²) forming the backing layer 7a and a layer of repulpable acrylic pressure-sensitive adhesive suitable for splicing applications (weight of ca. 40 g/m²) and having a width of 50 mm forming the adhesive layer 2, was employed as a starting material. The adhesive side of the tape was protected with a silicone-coated release liner of the same 50 mm width.

The 50 mm wide silicone-coated release liner of the first repulpable adhesive tape component was separated by score slitting using a rotary cutting die set at a depth sufficient to sever the liner, but not penetrate substantially into the layer of pressure-sensitive adhesive or the underlying tissue paper. The 50 mm wide liner was separated into a first portion 25 mm in width forming the cover film 3, and a second portion 25 mm in width forming the cover film 4

The cover film 3 was then peeled back from the slit without separating it completely from the adhesive layer 2. A strip of aluminium foil /paper laminate (Alcan Packaging Bridgenorth Ltd., UK, a 10 µm thick layer of aluminium laminated to a 40 µm thick tissue paper) having a width of 15 mm which formed the machine-detectable means 6, was then aligned flush against the edge of the cover film 4 and pressed onto the exposed adhesive layer 2. The cover film 3 was then allowed to fall back to its original position, covering the metal strip, but not adhering to it, as shown in Figure 1. The portion of the cover film 3 located above the metal strip was not firmly adhered to the tape and thus created a "fingenift", allowing easy grasping of the cover film 3 for removal. The metal strip was thus arranged parallel and adjacent to the inner edge of the cover film 4.

A second single-sided repulpable adhesive tape comprising a layer of tissue paper (weight of 31 g/m²) forming the backing layer 7b and a layer of repulpable acrylic pressure sensitive adhesive suitable for tabbing applications (weight of ca 45 g/m²) forming the adhesive layer 8 protected by a silicone coated release liner was then provided. The surface of the backing layer 7b opposite to the adhesive layer 8 was then coated with a layer of UV-curable lacquer forming a splittable layer 5b. The UV lacquer was obtained as L001 Lacquer from Paragon Inks, East Mains Industrial Estate, Broxham, West Lothian, Scotland, and was applied to the paper layer 7b using a gravure roller with a cell depth of about 10 µm. The lacquer was then cured with a 3 KW mercury vapour lamp.

A layer of an aqueous dispersion of synthetic resin emulsion (available as Lunabond 1533X from H. B. Fuller, Dukinfield, Cheshire, UK) was then coated on top of the cured lacquer layer by using a gravure roller with a cell depth of 56 µm; this adhesive layer formed the splittable layer 5a. The second repulpable adhesive tape was placed in contact through its adhesive layer 5a with the surface of the paper layer 7a opposite to the adhesive layer 2 of the first repulpable adhesive tape. Thus, a butt splicing tape 1 as shown in Fig. 1 was obtained.

The release liner protecting the layer 8 of tabbing adhesive was then removed and discarded. The final splicing tape construction was then wound into a roll.

In order to prepare a new web roll for a flying splice operation, the butt splicing tape construction thus described was adhered to a web roll by the steps of:
1. applying the splicing tape across the width of a new web roll 20 so that the tabbing adhesive layer 8 is adhered to the underlying layer 22 of the roll 20;
2. removing the cover film 3 along the length of the splicing tape by using the finger lift, thus exposing the metal strip and a portion of the splicing adhesive;
3. adhering the inner surface of the leading edge portion 21 of the roll web 20 to the exposed adhesive layer 2;
4. cutting away that portion of the leading edge 21 of the new roll 20 starting with that portion of the leading edge 21 that extends over the metal strip;
5. removing the cover film 4, exposing the second portion of the splicing adhesive layer 2 intended to bond to the trailing end of the old web 30.

The flying splice between the trailing end 30 of the old roll and the leading edge 21 of the new roll 20 was then performed by allowing the trailing end 30 of the old roll to contact the exposed part of the adhesive layer 2 of the new roll 20 bearing the butt splicing tape. The splicing tape ruptured in the splittable system 5 provided by layers 5a, 5b.

After the splice was performed, the metal strip was detected in the splice area by a metal detector.

### Example 2

Example 1 was repeated with the exception that the aluminium foil /paper laminate 6 (described above in Example 1) having a width of 20 mm was adhered to the layer 8 of pressure-sensitive tabbing adhesive of the second repulpable adhesive tape at a point roughly equidistant from the edges of the splicing tape construction. This construction is shown in Fig. 3.

After the flying splice was performed, the metal layer was found at a distance from the splice equal to the length of one winding of the web on the new roll 20. The metal layer was located under the tape, but could still be detected by a metal detector.

## Claims

1. A machine-detectable butt splicing tape (1) for splicing the leading edge (21) of a roll of sheet material (20) to a further sheet material (30) each winding of said sheet material on said roll (20) having an outer surface facing radially outwards from said roll (20) and an opposite inner surface, said butt splicing tape (1) comprising a backing (7) comprising at least one backing layer (7a) bearing a first adhesive layer (2) covered by two detachable protective films, namely a first detachable protective film (3) and a second detachable protective film (4) which are in an abutting position with respect to each other and can be removed separately from the first adhesive layer (2) wherein the part of the first adhesive layer (2) being covered by the first detachable protective film (3) allows for attaching said butt splicing tape (1) to the inner surface of the leading edge (21) of the roll (20) substantially accross the width of the roll (20) in cross direction (CD) and the part of the first adhesive layer (2) for making the splice connection being covered by the second detachable protective film (4) allows for attaching said butt splicing tape (1) to said further sheet material (30), said butt splicing tape (1) further comprising a second adhesive layer (8) for attaching said butt splicing tape (1) to the outer surface of the underlying winding (22) of said roll (20) substantially across the width of said roll (20) in cross direction (CD), the butt splicing tape (1) further comprising a splittable system (5) which breaks upon splicing so that the outer surface of the underlying winding of said roll (20) is left in a non-tacky condition, the butt splicing tape (1) further comprising a metal foil a metal film (6) being arranged on the first adhesive layer (2) for making the splice connection, on the second adhesive layer (8) or with an additional adhesive layer (9) on the surface of the backing (7) directly facing the outer surface of the underlying winding (22) of the roll (20) or the backing layer (7a) directly facing the outer surface of the underlying winding (22) of the roll (20), whereby the ratio of the width of the metal foil or film (6) in machine direction (MD) over the width of the butt splicing tape (1) in machine direction is between 0.05 and 0.5, wherein the splittable system (5) forms part of the backing (7).

2. Butt splicing according to claim 1 wherein the splittable system (5) comprises at least one internally splittable layer.

3. Butt splicing tape according to any of claims 1-2 wherein the splittable system (5) comprises a splittable laminate of at least two layers (5a, 5b).

4. Butt splicing tape (1) according to any of the preceding claims wherein the metal film or foil (6) is arranged on the first adhesive layer (2) for making the splice connection so that it is covered partly by the first protective film (3) and partly by the second protective film (4).

5. Butt splicing tape (1) according to any of claims 1-3 wherein the metal layer foil or film (6) is arranged on the first adhesive layer (2) for making the splice connection so that it is covered by one of the protective films (3), (4) and is in an abutting position with respect to the inner edge of the other protective film.

6. Method of preparing a roll (20) of sheet material for making a butt splice connection between the leading edge (21) of said roll (20) and a further sheet material (30), each winding of said sheet material on said roll (20) having an outer surface facing radially outwards from said roll (20) and an opposite inner surface, said method comprising the steps of
(i) providing a butt splicing tape (1) according to any of claims 1-5,
(ii) folding back the leading edge (21) of said roll (20) and adhering the butt splicing tape (1) through the second adhesive layer (8) to the outer surface of the underlying winding (22) of said roll (20) substantially across the width of said roll (20) in cross-direction (CD),
(iii) removing the first protective film (3) and folding back the leading edge (21) onto the outer surface of the underlying winding (22), thereby adhering the inner surface of the leading edge (21) of the roll (20) to the exposed part of the first adhesive layer (2) for making the splice connection of the butt splicing tape (1),
(iv) folding back the leading edge (21) of the roll (20) along the inner edge of the second protective film (4) and tearing off the part of the leading edge (21) of the roll (20) not bonded to the first adhesive layer (2) for making the splice connection, and
(v) removing the second protective film (4) from the first adhesive layer (2) for making the splice connection of the butt splicing tape (1).

7. Method of making a flying butt splicing connection between the leading edge (21) of a roll (20) of sheet material and a further sheet material (30) passing by said roll (20) with a sheet speed (v), each winding of said sheet material on said roll (20) having an outer surface facing radially outwards from said roll (20) and an opposite inner surface, comprising
(i) preparing said roll (20) for making a splice connection according to the method of claim 6,
(ii) bringing the roll (20) to a rotational speed essential equal to the sheet speed (v) of the further sheet material (30),
(iii) identifying the metal film or metal foil (6) when it is in a position close to the further sheet material (30) by means of a sensor (40) and pressing the roll (20) and the further sheet material (30) against each other by means of a paster device (41) thereby making the splice, and
(iv) cutting off the trailing end of the further sheet material (30).

8. Use of the butt splicing tape (1) according to any of claims 1-5 in the paper or printing industry.

## Patentansprüche

1. Maschinell erkennbares Stoßverbindungsband (1) zum Spleißen des vorläufigen Rands (21) einer Rolle Bogenmaterials (20) an ein weiteres Bogenmaterial (30), wobei jede Wicklung des Bogenmaterials auf der Rolle (20) eine von der Rolle (20) radial nach außen gewandte Außenfläche und eine gegenüberliegende Innenfläche aufweist, wobei das Stoßverbindungsband (1) einen Träger (7) aufweist, der mindestens eine Trägerschicht (7a) aufweist, die eine erste Klebefläche (2) trägt, die von zwei ablösbaren Schutzfolien bedeckt ist, nämlich einer ersten ablösbaren Schutzfolie (3) und einer zweiten ablösbaren Schutzfolie (4), die in einer zusammenstoßenden Position liegen und separat von der ersten Klebeschicht (2) entfernt werden können, wobei der von der ersten ablösbaren Schutzfolie (3) bedeckte Teil der ersten Klebeschicht (2) gestattet, dass das Stoßverbindungsband (1) an der Innenfläche des vorläufigen Rands (21) der Rolle (20) im Wesentlichen über die Breite der Rolle (20) in Querrichtung (CD) befestigt wird, und der von der zweiten ablösbaren Schutzfolie (4) bedeckte Teil der ersten Klebeschicht (2) für die Herbeiführung der Spleißverbindung gestattet, dass das Stoßverbindungsband (1) an dem weiteren Bogenmaterial (30) befestigt wird, wobei das Stoßverbindungsband (1) ferner eine zweite Klebeschicht (8) zur Befestigung des Stoßverbindungsbands (1) an der Außenfläche der unterliegenden Wicklung (22) der Rolle (20) im Wesentlichen über die Breite der Rolle (20) in Querrichtung (CD) aufweist, wobei das Stoßverbindungsband (1) ferner ein spaltbares System (5), das beim Spleißen derart bricht, dass die Außenfläche der unterliegenden Wicklung der Rolle (20) in einem nicht-klebrigen Zustand hinterlassen wird, aufweist, wobei das Stoßverbindungsband (1) ferner eine Metallfolie (6) aufweist, die auf der ersten Klebeschicht (2) für die Herbeiführung der Spleißverbindung, auf der zweiten Klebeschicht (8) oder mit einer zusätzlichen Klebeschicht (9) auf der Fläche des Trägers (7), die direkt der Außenfläche der unterliegenden Wicklung (22) der Rolle (20) zugewandt ist, oder der Trägerschicht (7a) angeordnet ist, die direkt der Außenfläche der unterliegenden Wicklung (22) der Rolle (20) zugewandt ist, wodurch das Verhältnis der Breite der Metallfolie (6) in der Maschinenrichtung (MD) über die Breite des Stoßverbindungsbands (1) in der Maschinenrichtung zwischen 0,05 und 0,5 liegt, wobei das spaltbare System (5) Teil des Trägers (7) bildet.

2. Stoßverbindungsband nach Anspruch 1, wobei das spaltbare System (5) mindestens eine spaltbare Innenschicht aufweist.

3. Stoßverbindungsband nach einem der Ansprüche 1-2, wobei das spaltbare System (5) ein spaltbares Laminat von mindestens zwei Schichten (5a, 5b) aufweist.

4. Stoßverbindungsband (1) nach einem der vorhergehenden Ansprüche, wobei die Metallfolie (6) derart auf der ersten Klebeschicht (2) für die Herbeiführung der Spleißverbindung angeordnet ist, dass sie zum Teil von der ersten Schutzfolie (3) und zum Teil von der zweiten Schutzfolie (4) bedeckt ist.

5. Stoßverbindungsband (1) nach einem der Ansprüche 1-3, wobei die Metallfolie (6) derart auf der ersten Klebeschicht (2) für die Herbeiführung der Spleißverbindung angeordnet ist, dass sie von einer der Schutzfolien (3), (4) bedeckt ist und sich in einer zusammenstoßenden Position bezüglich des Innenrands der anderen Schutzfolie befindet.

6. Verfahren zum Vorbereiten einer Rolle (20) Bogenmaterial zur Herbeiführung einer Stoßverbindung zwischen dem vorläufigen Rand (21) der Rolle (20) und einem weiteren Bogenmaterial (30), wobei jede Wicklung des Bogenmaterials auf der Rolle (20) eine von der Rolle (20) radial nach außen gewandte Außenfläche und eine gegenüberliegende Innenfläche aufweist, wobei das Verfahren die Folgenden Schritte aufweist:
(i) Schaffen eines Stoßverbindungsbands (1) nach einem der Ansprüche 1-5,
(ii) Zurückfalten des vorläufigen Rands (21) der Rolle (20) und Kleben des Stoßverbindungsbands (1) durch die zweite Klebeschicht (8) auf die Außenfläche der unterliegenden Wicklung (22) der Rolle (20) im Wesentlichen über die Breite der Rolle (20) in Querrichtung (CD),
(iii) Entfernen der ersten Schutzfolie (3) und Zurückfalten des vorläufigen Rands (21) auf die Außenfläche der unterliegenden Wicklung (22), wodurch die Innenfläche des vorläufigen Rands (21) der Rolle (20) auf den freiliegenden Teil der ersten Klebeschicht (2) für die Herbeiführung der Spleißverbindung des Stoßverbindungsbands (1) geklebt wird,
(iv) Zurückfalten des vorläufigen Rands (21) der Rolle (20) entlang dem Innenrand der zweiten Schutzfolie (4) und Abreißen des Teils des vorläufigen Rands (21) der Rolle (20), der nicht mit der ersten Klebeschicht (2) für die Herbeiführung der Spleißverbindung verbunden ist, und
(v) Entfernen der zweiten Schutzschicht (4) von der ersten Klebeschicht (2) für die Herbeiführung der Spleißverbindung des Stoßverbindungsbands (1).

7. Verfahren zur Herstellung einer fliegenden Stoßverbindung zwischen dem vorläufigen Rand (21) der Rolle (20) Bogenmaterial und einem weiteren mit einer Bogengeschwindigkeit (v) an der Rolle (20) vorbeilaufenden Bogenmaterial (30), wobei jede Wicklung des Bogenmaterials auf der Rolle (20) eine von der Rolle (20) radial nach außen gewandte Außenfläche und eine gegenüberliegende Innenfläche aufweist, mit
(i) Vorbereiten der Rolle (20) zur Herbeiführung einer Stoßverbindung nach dem Verfahren in Anspruch 6,
(ii) Bringen der Rolle (20) auf eine Drehgeschwindigkeit, die im Wesentlichen gleich der Bogengeschwindigkeit (v) des weiteren Bogenmaterials (30) ist,
(iii) Identifizieren der Metallfolie (6), wenn sie sich in einer Position nahe am weiteren Bogenmaterial (30) befindet, mittels eines Sensors (40) und Zusammendrücken der Rolle (20) und des weiteren Bogenmaterials (30) mittels einer Klebeeinrichtung (41) und **dadurch** Herbeiführen der Spleißung, und
(iv) Abschneiden des nachläufigen Endes des weiteren Bogenmaterials.

8. Verwendung des Stoßverbindungsbands (1) nach einem der Ansprüche 1-5 in der Papier- oder Druckindustrie.

## Revendications

1. Bande détectable à la machine pour joints bout à bout (1) pour joindre le bord avant (21) d'un rouleau de matière en feuille (20) à une autre matière en feuille (30), chaque spire de ladite matière en feuille sur ledit rouleau (20) présentant une surface extérieure orientée radialement vers l'extérieur à partir dudit rouleau (20), et une surface intérieure opposée, ladite bande pour joints bout à bout (1) comprenant un dossier (7) comprenant au moins une couche de dossier (7a) portant une première couche adhésive (2) recouverte par deux films de protection détachables, à savoir un premier film de protection détachable (3) et un second film de protection détachable (4), qui se trouvent dans une position d'aboutement l'un par rapport à l'autre et qui peuvent être enlevés séparément de la première couche adhésive (2), dans laquelle la partie de la première couche adhésive (2) qui est recouverte par le premier film de protection détachable (3) permet de fixer ladite bande pour joints bout à bout (1) à la surface intérieure du bord avant (21) du rouleau (20) essentiellement en travers de la largeur du rouleau (20) dans la direction transversale (CD), et la partie de la première couche adhésive (2) pour établir la connexion de jonction qui est recouverte par le second film de protection détachable (4) permet de fixer ladite bande pour joints bout à bout (1) à ladite autre matière en feuille (30), ladite bande pour joints bout à bout (1) comprenant en outre une seconde couche adhésive (8) pour fixer ladite bande pour joints bout à bout (1) à la surface extérieure de la spire sous-jacente (22) dudit rouleau (20) essentiellement en travers de la largeur dudit rouleau (20) dans la direction transversale (CD), la bande pour joints bout à bout (1) comprenant en outre un système séparable (5) qui se rompt lors de la jonction de telle sorte que la surface extérieure de la spire sous-jacente dudit rouleau (20) soit laissée dans une condition non collante, la bande pour joints bout à bout (1) comprenant en outre une feuille métallique ou un film métallique (6) qui est disposé(e) sur la première couche adhésive (2) pour établir la connexion de jonction, sur la seconde couche adhésive (8) ou avec une couche adhésive supplémentaire (9) sur la surface du dossier (7) faisant face directement à la surface extérieure de la spire sous-jacente (22) du rouleau (20), ou de la couche de dossier (7a), dans laquelle le rapport de la largeur de la feuille ou du film métallique (6) dans le sens machine (MD) à la largeur de la bande pour joints bout à bout (1) dans le sens machine est compris entre 0,05 et 0,5, dans laquelle le système séparable (5) fait partie du dossier (7).

2. Bande pour joints bout à bout (1) selon la revendication 1, dans laquelle le système séparable (5) comprend au moins une couche séparable intérieurement.

3. Bande pour joints bout à bout (1) selon l'une quelconque des revendications 1 et 2, dans laquelle le système séparable (5) comprend un élément stratifié séparable composé d'au moins deux couches (5a, 5b).

4. Bande pour joints bout à bout (1) selon l'une quelconque des revendications précédentes, dans laquelle la feuille ou le film métallique (6) est disposé(e) sur la première couche adhésive (2) pour établir la connexion de jonction de telle sorte qu'elle soit recouverte partiellement par le premier film de protection (3) et partiellement par le second film de protection (4).

5. Bande pour joints bout à bout (1) selon l'une quelconque des revendications 1 à 3, dans laquelle la feuille ou le film métallique (6) est disposé(e) sur la première couche adhésive (2) pour établir la connexion de jonction de telle sorte qu'elle soit recouverte par l'un des films de protection (3), (4), et se trouve dans une position d'aboutement par rapport au bord intérieur de l'autre film de protection.

6. Procédé de préparation d'un rouleau (20) de matière en feuille pour fabriquer une connexion pour joints bout à bout entre le bord avant (21) dudit rouleau (20) et une autre matière en feuille (30), chaque spire de ladite matière en feuille sur ledit rouleau (20) présentant une surface extérieure orientée radialement vers l'extérieur à partir dudit rouleau (20), et une surface intérieure opposée, ledit procédé comprenant les étapes suivantes:
(i) fournir une bande pour joints bout à bout (1) selon l'une quelconque des revendications 1 à 5;
(ii) replier le bord avant (21) dudit rouleau (20) et coller la bande pour joints bout à bout (1) au moyen de la seconde couche adhésive (8) sur la surface extérieure de la spire sous-jacente (22) dudit rouleau (20) essentiellement en travers de la largeur dudit rouleau (20) dans la direction transversale (CD);
(iii) enlever le premier film de protection (3) et replier le bord avant (21) sur la surface extérieure de la spire sous-jacente (22), collant ainsi la surface intérieure du bord avant (21) du rouleau (20) sur la partie exposée de la première couche adhésive (2) pour établir la connexion de jonction de la bande pour joints bout à bout (1);
(iv) replier le bord avant (21) du rouleau (20) le long du bord intérieur du second film de protection (4) et déchirer la partie du bord avant (21) du rouleau (20) qui n'est pas collée à la première couche adhésive (2) pour établir la connexion de jonction; et
(v) enlever le second film de protection (4) de la première couche adhésive (2) pour établir la connexion de jonction de la bande pour joints bout à bout (1).

7. Procédé de fabrication d'une connexion pour joints bout à bout automatisée entre le bord avant (21) d'un rouleau (20) de matière en feuille et une autre matière en feuille (30) qui passe par ledit rouleau (20) avec une vitesse de feuille (v), chaque spire de ladite matière en feuille sur ledit rouleau (20) présentant une surface extérieure qui est orientée radialement vers l'extérieur à partir dudit rouleau (20), et une surface intérieure opposée, comprenant les étapes suivantes:
(i) préparer ledit rouleau (20) pour fabriquer une connexion de jonction selon le procédé de la revendication 6;
(ii) amener le rouleau (20) à une vitesse de rotation sensiblement égale à la vitesse de feuille (v) de l'autre matière.en feuille (30);
(iii) identifier la feuille ou le film métallique (6) lorsqu'il (elle) se trouve dans une position proche de l'autre matière en feuille (30) en utilisant un capteur (40) et presser le rouleau (20) et l'autre matière en feuille (30) l'un contre l'autre au moyen d'un dispositif d'encollage (41), formant ainsi le joint; et
(iv) couper l'extrémité arrière de l'autre matière en feuille (30).

8. Utilisation de la bande pour joints bout à bout (1) selon l'une quelconque des revendications 1 à 5, dans l'industrie du papier ou l'industrie graphique.
